# EUROPEAN PATENT APPLICATION

(11) **EP 1 467 374 A1**
(43) Date of publication of application: **13.10.2004**
(21) Application number: 04076088.6
(22) Date of filing: 07.04.2004
(51) Int. Cl.: G11B 27/32, G11B 27/34, G11B 27/10

(54) **Determination and display of file content of an MP3 compact disc in a vehicle audio system**

(30) Priority: 09.04.2003 US 409794
(71) Applicant: Delphi Technologies, Inc., Troy, MI 48007 (US)
(72) Inventor: Lee, Long K., Brookfield, WI 53045 (US); Thai, Hung D., Carmel, IN 46033 (US); Mitchell, Gary K., Kokomo, IN 46901 (US); Toms, Mona L., Carmel, IN 46032 (US); Mccomas, Kathryn A., Kokomo, IN 46901 (US)
(74) Representative: Denton, Michael John

(57) **Abstract**

A vehicle audio system (20) is provided that includes an audio receiver (22) having a radio tuner (23), a random access media reader (24) adapted for accessing audio data files such as those stored on a compact disc, a display (32, 132), a processor (26), and software. The software enables the processor (26) to detect when a compact disc is coupled with the random access media reader (24), to read the number of audio data files and data folders stored on the compact disc, and to display the number of files and folders on the audio system display (32, 132).

## Description

### TECHNICAL BACKGROUND

The present invention relates to a vehicle audio system having a compact disc player.

### BACKGROUND OF THE INVENTION

Audio systems having compact disc (CDs) players have become commonplace in vehicles. CDs generally have individual "tracks" or digital audio data files that can be processed for playback of a recording stored in the data file.

Audio CDs conventionally include up to fifteen tracks available for playback. An audio system user may select from the various tracks by using pushbuttons on the audio system user interface. Viewing a display of the track name or number and using the pushbuttons to step between tracks is generally sufficient to select a user's track of choice from the low number of tracks available on a conventional audio CD. However, the introduction of compressed audio data file formats, such as MP3, on a data CD now allows such data CDs to have 200 or more different tracks.

Audio data file formats may also contain display and searching information stored in each audio data file in addition to the compressed sound recording. For example, MP3 files may include ID3 tags which contain informational text associated with the audio data file, such as track or song name. However, even with such information, using pushbuttons can be extremely cumbersome for a user to locate a particular desired audio data file for playback from among over 200 tracks.

In addition to supporting a growing number of audio data files on a single CD, data CD formats generally organize the audio data files into groups stored in folders or playlists. For example, audio data files may be grouped into folders that each relate to a particular artist, album, genre, or other characteristic of the particular recordings stored in the audio data files stored in each folder. Additionally, playlists are used to organize a group of audio data files into a preferred playback order.

### SUMMARY OF THE INVENTION

The present invention addresses some of the above-noted limitations of audio systems, particularly vehicle audio systems, by providing an audio system including an audio receiver having a radio tuner, a random access media reader adapted to access audio data files stored on removable random access media, such as an audio or data CD, a processor, and a user interface including a display for displaying information related to the audio data files. Software enables the processor to detect when a CD is coupled with the random access media reader, to read the number of audio data files and data folders stored on the CD, and to display the number of files and folders on the audio system display.

The user interface includes a display and various user input devices. The display is also capable of displaying information related to a selected audio data file, such as the track number and a label such as the track name or filename. The user input devices include a TUNE switch that is selectively operable in at least two modes. The first mode is operable for tuning the radio tuner when the radio is in use. The second mode, "fast track, " is operable for stepping the selection from one of the audio data files to another one of the audio data files when the random access media reader is in use.

The audio data files available for playback are generally stored on a random access media (such as a data CD) in groups, such as playlists and folders. Specifically, the media may include several playlists, each playlist including a plurality of audio data files or, more typically, audio data file pointers. Each folder may include a plurality of audio data files as well as subfolders.

The user interface also includes a FOLDER UP switch and a FOLDER DOWN switch each having two modes. The first mode of the switches for selecting a radio tuner preset and the second mode for stepping the selection between the various folders and playlists. In the second mode, the FOLDER UP and FOLDER DOWN switches first step the selection between the available playlists, and then step the selection between the available folders.

In one form of the invention, an audio system is provided including a random access media reader adapted to access audio data files stored in playlists and folders on a removable random access media, a processor coupled to the random access media reader and capable of accessing information in the audio data files, an audio receiver having a radio tuner, the audio receiver connected to the processor, and a display connected to the processor and adapted for displaying the information related to the audio data files, playlists, and folders.

In another form of the invention, a method is provided for cataloguing a plurality of audio data files stored in folders and playlists on random access media in an audio system having an audio receiver, a random access media reader, and a display, including the steps of reading the media to determine the number of audio data files stored on the media and displaying on the display the number of audio data files.

In yet another form of the invention, an audio system is provided including an audio receiver, a random access media reader adapted for accessing audio data files stored in folders and playlists on random access media, a processor coupling the audio receiver and the random access media reader, a display coupled to the processor, and software enabling the processor to read the media data structure to determine the number of audio data files stored on the media and display the number of audio data files on the display.

Advantageously, the invention provides an audio system for detecting when a CD is coupled with a random access media reader, reading the number of audio data files and data folders stored on the CD, and displaying the number of files and folders on the audio system display.

### BRIEF DESCRIPTION OF THE DRAWINGS

The present invention will now be described, by way of example, with reference to the accompanying drawings, in which:
Fig. 1 is a perspective view of an exemplary embodiment of the audio system according to the present invention and installed in the dash of a vehicle;
Fig. 2 is a schematic block diagram of the audio system shown in Fig. 1;
Fig. 3 is a plan view of a first exemplary embodiment of the user interface of the audio system shown in Fig. 2;
Figs. 4A - 4H are plan views of the display portion of the user interface shown in Fig. 3;
Fig. 5 is a plan view of a second exemplary embodiment of the user interface of the audio system shown in Fig. 2;
Figs. 6A - 6H are plan views of the display portion of the user interface shown in Fig. 5;
Fig. 7 is a plan view of an exemplary data structure of a first data CD; and
Fig. 8 is a flowchart diagram illustrating the steps for accessing and displaying information regarding a compact disc in an audio system according to the present invention.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention and such exemplifications are not to be construed as limiting the scope of the invention in any manner.

### DESCRIPTION OF INVENTION

The embodiments disclosed below are not intended to be exhaustive or limit the invention to the precise forms disclosed in the following detailed description. Rather, the embodiments are chosen and described so that others skilled in the art may utilize their teachings.

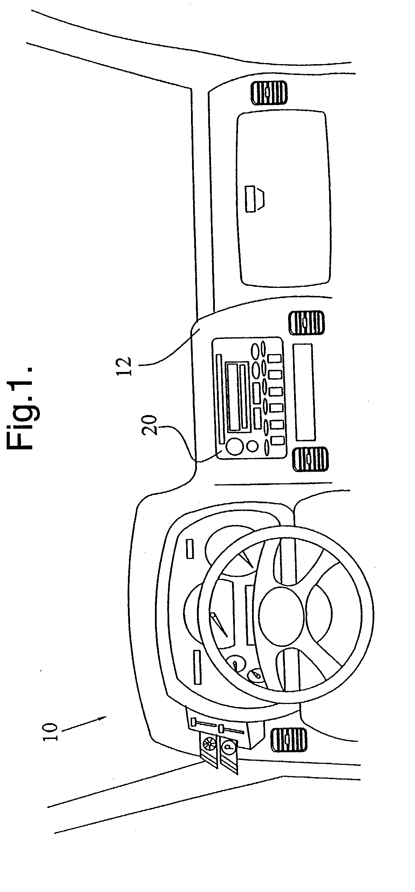

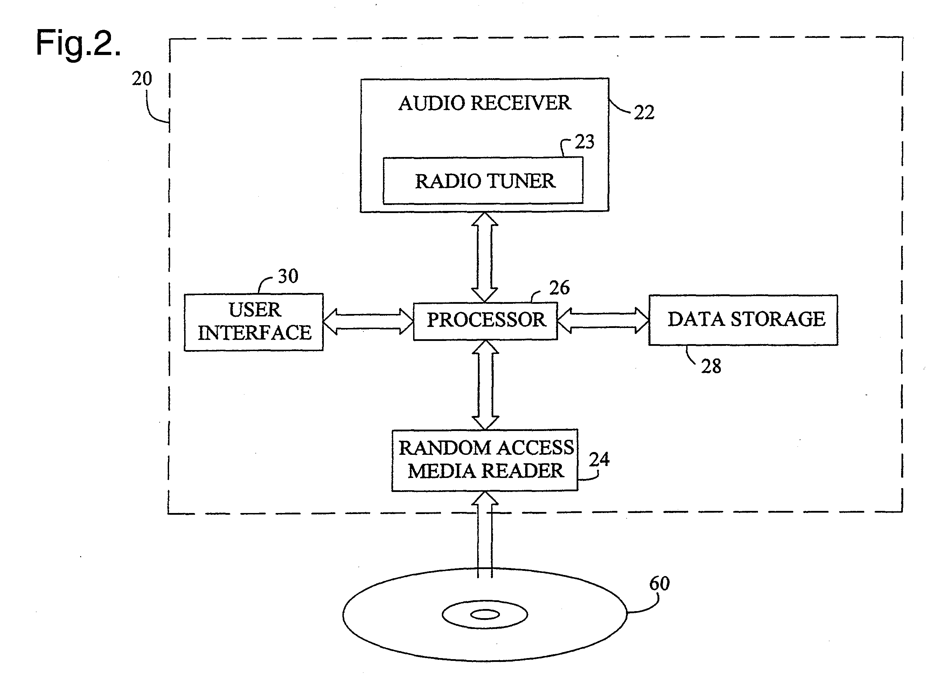

Fig. 1 shows a portion of the interior passenger compartment of vehicle 10 having an exemplary embodiment of audio system 20 installed in dash 12. Referring to Fig. 2, audio system 20 may include audio receiver 22, radio tuner 23, random access media reader 24, data storage 28, and user interface 30 coupled to processor 26. Random access media reader 24 is capable of releasably receiving random access media, such as audio or data CD 60, for example.

Processor 26 may be a single processor, multiple processors, a component of random access media reader 24, or a component of audio receiver 22. Similarly, radio tuner 23 may be a part of audio receiver 22 or may be a separate component coupled to audio receiver 22.

Random access media reader 24 is adapted for accessing audio data files stored on CD 60. CD 60 may be a standard audio CD, such as those containing CDA format files, or a data CD, such as those having compressed audio data files, for example, MP3 format files. Other random access media and readers may also be used, for example, DVD, mini-disc, PCMCIA, etc.

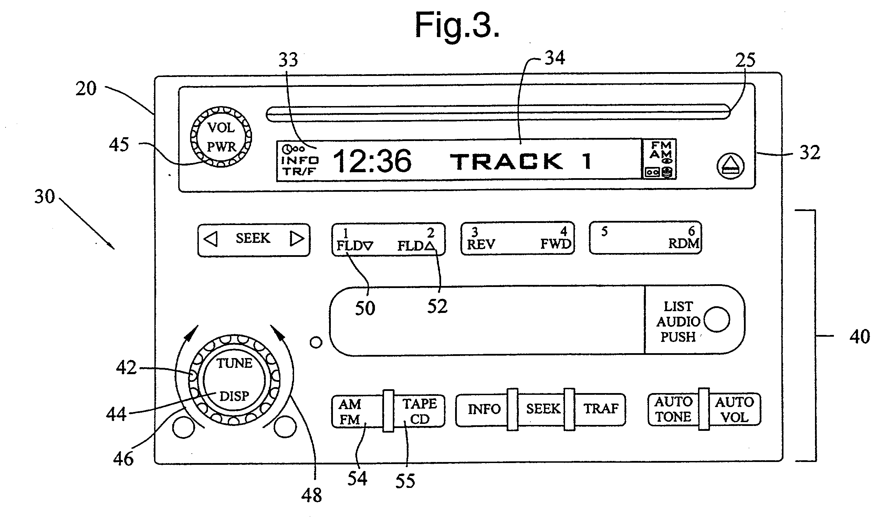

Fig. 3 shows a first exemplary embodiment of user interface 30 of audio system 20. User interface 30 generally includes CD receiving slot 25, display 32, and various user input devices 40. Display 32 may include first display area 33 and second display area 34. Input devices 40 include TUNE switch 42, DISPLAY switch 44, VOLUME switch 45, FOLDER DOWN pushbutton 50, FOLDER UP pushbutton 52, RADIO pushbutton 54, and CD pushbutton 55.

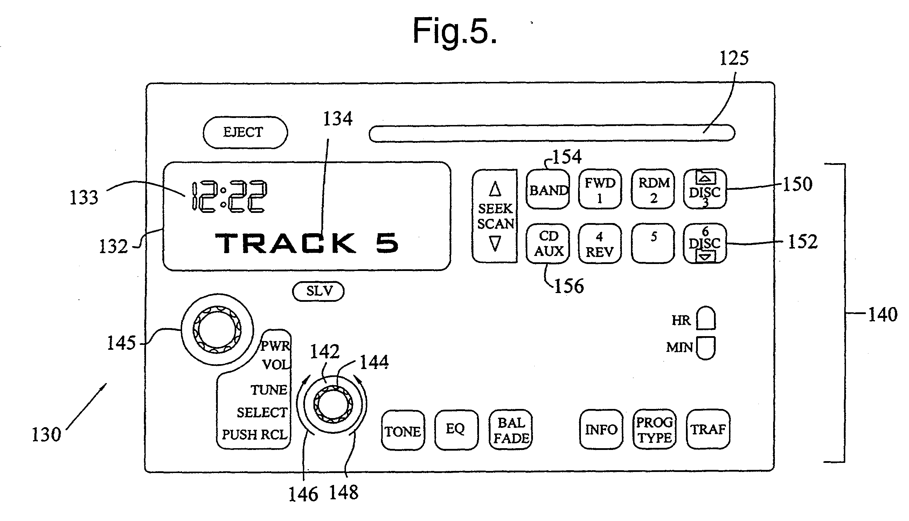

Fig. 5 shows a second exemplary embodiment of user interface 130 of audio system 20. User interface 130 generally includes CD receiving slot 125, display 132, and user input devices 140. Display 132 may include first display area 133 and second display area 134. Input devices 140 include TUNE switch 142, RCL switch 144, VOLUME switch 145, FOLDER UP pushbutton 150, FOLDER DOWN pushbutton 152, RADIO pushbutton 154, and CD pushbutton 156.

Audio system 20 has two modes of operation. A first mode, selected by actuating RADIO pushbutton 54, 154 which activates radio tuner 23, deactivates random access media reader 24, and sets TUNE switch 42, 142 and FOLDER UP/DOWN pushbuttons 50, 52, 150, 152 to the first mode of operation. In the first mode, TUNE switch 42, 142 and FOLDER UP/DOWN pushbuttons 50, 52, 150, 152 are operable for tuning radio tuner 23, which then provides an audio signal to audio receiver 22. A second mode of operation is selected by actuating CD pushbutton 55, 155 and is operable for activating random access media reader 24, deactivating radio tuner 23, and setting TUNE switch 42, 142 and FOLDER UP/DOWN pushbuttons 50, 52, 150, 152 to the second mode of operation. In the second mode, TUNE switch 42, 142 is operable for rapidly stepping between available audio data files and initiating playback of a selected audio data file, and FOLDER UP/DOWN pushbuttons 50, 52, 150, 152 are operable for stepping the selection between various folders and playlists.

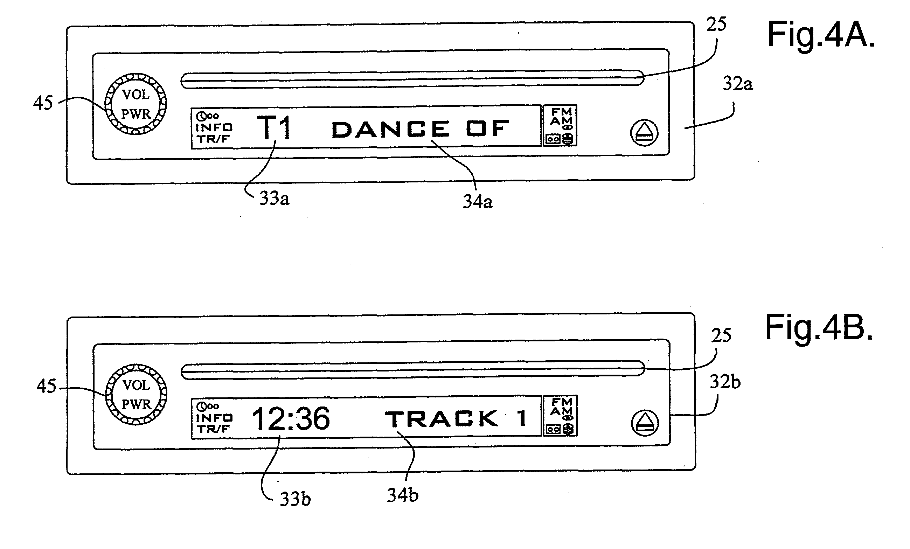

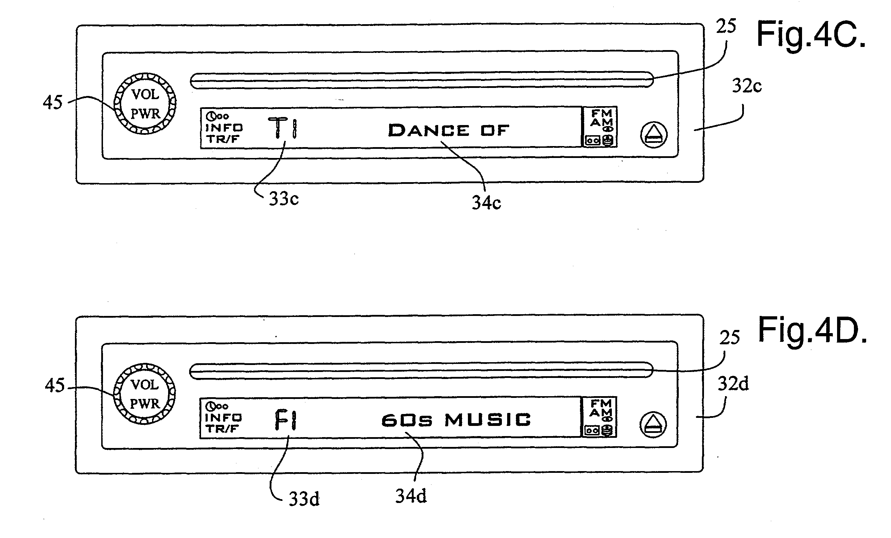

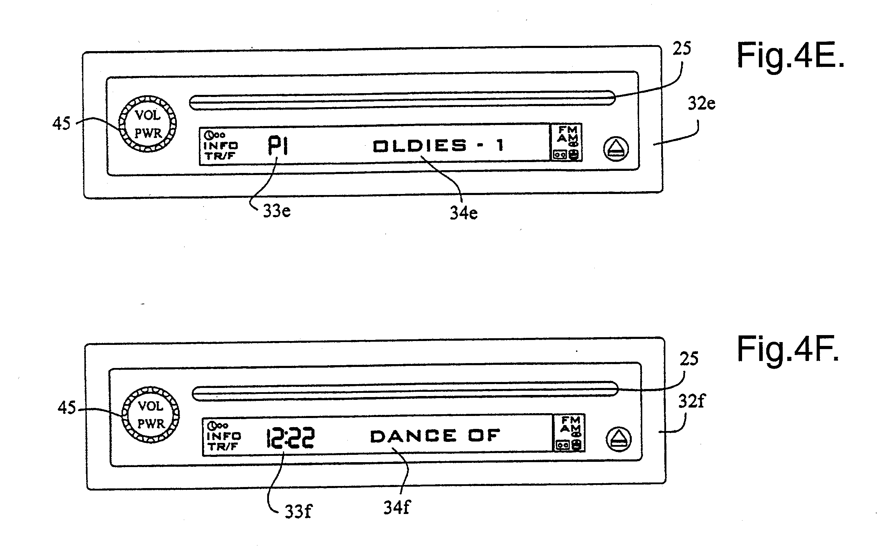

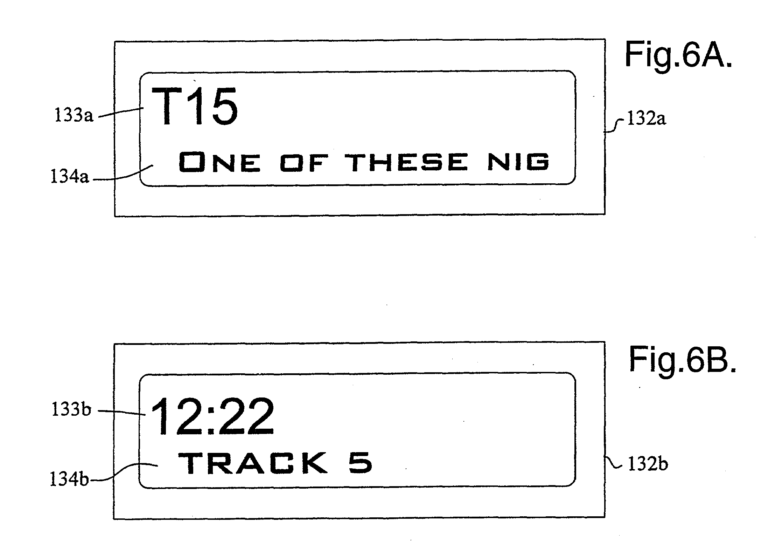

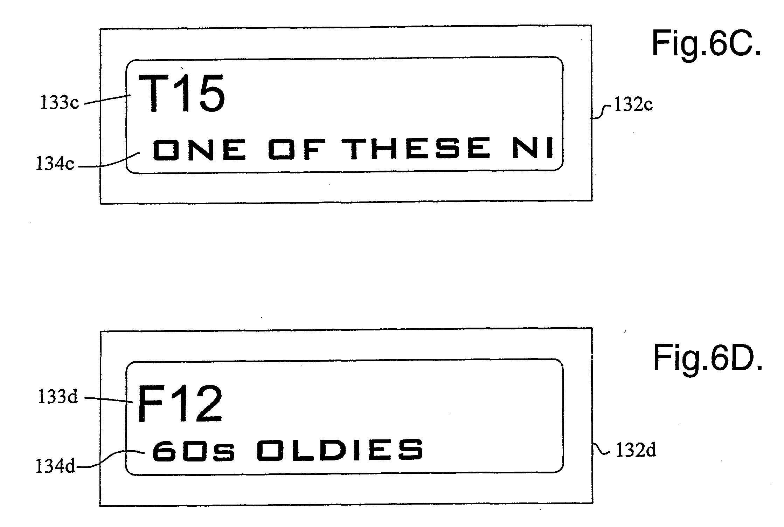

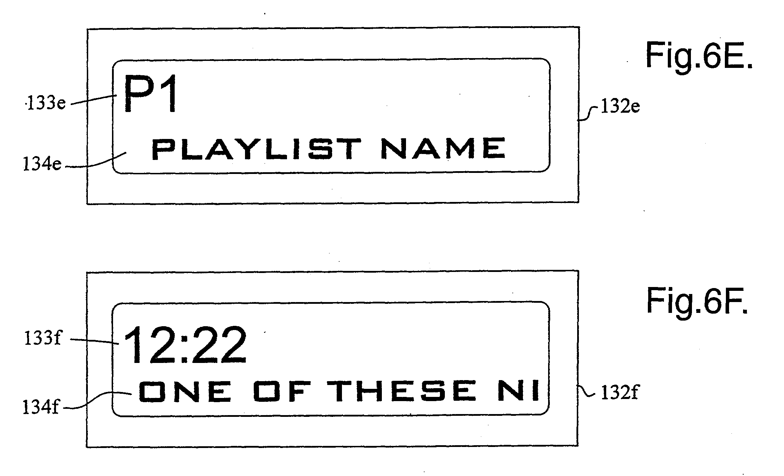

Display 32 normally displays information related to the audio data files, playlists, and folders accessible by random access media reader 24. Referring to Fig. 4A, if CD 60 is a data CD, such as those having files with an MP3 format, display 32a may display the letter T followed by a track number in display area 33a and a filename or first portion of a filename in display area 34a. For example, as shown in Fig. 4A, the first available audio data file on CD 60 is track 1, displayed as "T1" in first display area 33a, and has a first portion of the filename of track 1, "DANCE OF", shown in second display area 34a. If the filename includes an extension, such as ".mp3", only the portion of the filename preceding the extension will be displayed. Alternatively, second display area 34a may be used to display a track name, such as is stored in an ID3 tag field in an MP3 audio data file. As shown in Fig. 6A, display 132a of the second exemplary embodiment of user interface 130 also shows a track number in first display area 133a and filename or track name in second display area 134a.

Referring to Fig. 4B, if CD 60 is a standard audio CD, such as those having CDA format audio data files, display 32b may display the time of day in first display area 33b and the word "track" followed by the track number of the currently selected audio data file in second display area 34b. Similarly, as shown in Fig. 6B, the second exemplary embodiment of user interface 130 includes display area 132b showing the time of day in first display area 133b and the track number in second display area 133b.

The display formats shown in Figs. 4A, 4B, 6A, and 6B are exemplary only. Other display formats displaying the same or other information or labels related to the audio data files may also be used. For example, the formats shown in Figs. 4C-4F and 6C-6F.

However, upon coupling CD 60 with random access media reader 24 by inserting CD 60 into receiving slot 25, 125, display 32, 132 will display information relating to the audio data files, playlists, and folders available on CD 60 for playback by audio system 20. The display of information relating to the audio data files, playlists, and folders available on CD 60 may continue until there is a user selection of another function, or may, for example, continue for a preset duration, such as 2 seconds. In the case of using a preset duration, after expiration of the preset duration, display may return to the previous audio data file display format, such as one of Figs. 4A - 4F and 6A - 6F.

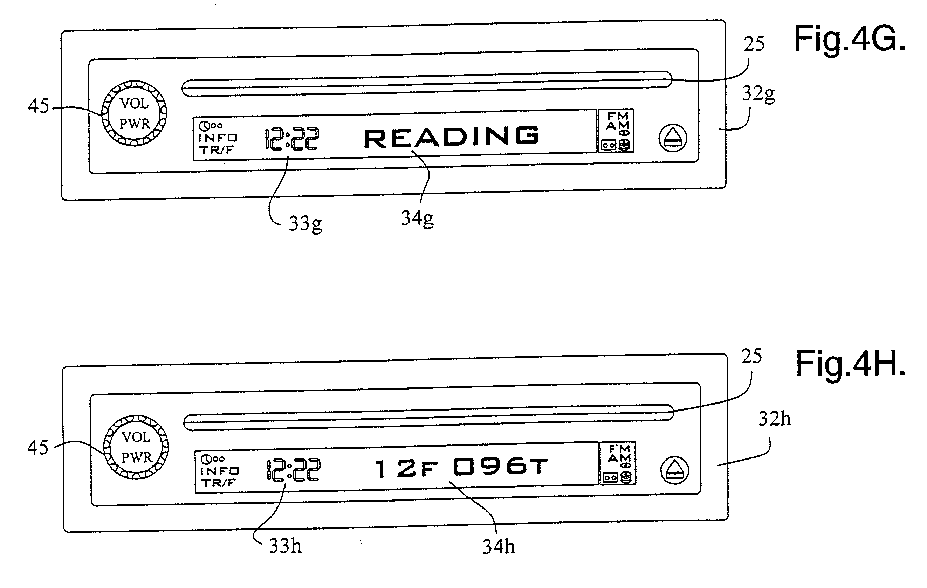

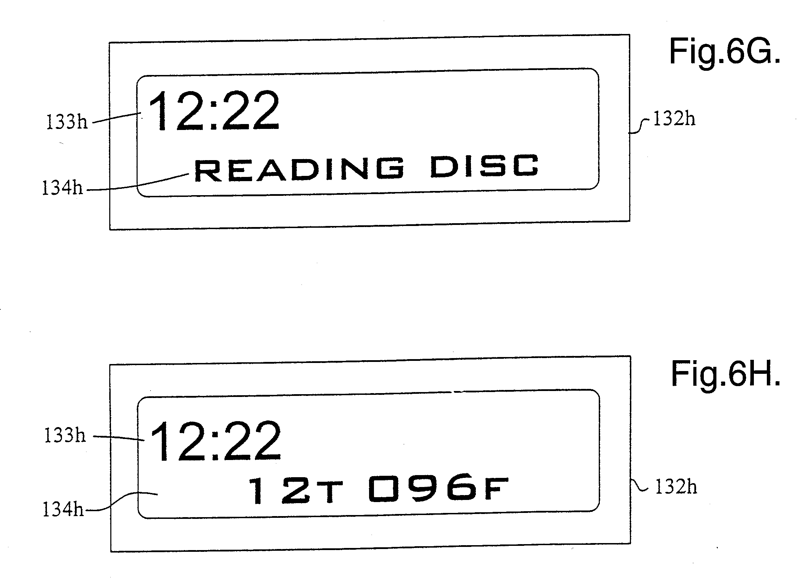

Referring to Figs. 4G and 6G, a display format is shown which audio system 20 may display when CD 60 is first coupled to random access media reader 24 and while random access media reader 24 is accessing the data structure of CD 60. Upon completion of reading the data structure, as shown in Figs. 4H and 6H, audio system 20 may display the number of folders and number of audio data files or tracks stored on CD 60.

Display 32, 132 may also display additional or alternative information regarding the data structure of CD 60, for example, the number of playlists stored on CD 60. In the first and second exemplary embodiments of user interface 30, 130, display 32h, 132h, including the number of folders and tracks, will be displayed for a preset duration, for example of approximately 2 seconds. After the expiration of the preset duration, display 32, 132 may use a default format such as one of those shown in Figs. 4A - 4F and Figs. 6A - 6F.

The present invention also includes a method for displaying at least one of the number of audio data files, number of playlists, and number of folders available to random access media reader 24 and audio system 20. In the exemplary embodiment, the method is executed by software in processor 26, and displays the number of folders and audio data files or tracks. However, the method may alternatively be implemented by the hardware design of the electronics or a combination of hardware and software.

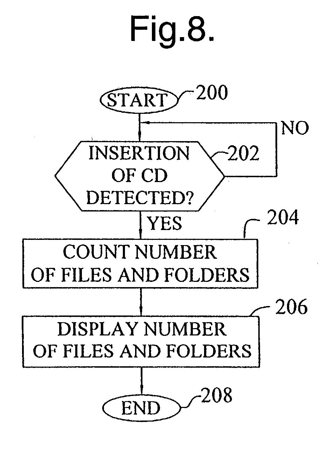

Fig. 8 shows a flowchart illustrating the steps for displaying the number of folders and audio data files in audio system 20. Method 200 commences at step 202. In step 202, processor 26 determines whether CD 60 has been coupled with random access media reader 24. If CD 60 has been coupled, method 200 continues at step 204, else step 202 is executed until CD 60 is coupled with removable random access media 24. In step 204, random access media reader 24 accesses the data structure of CD 60 so that processor 26 may determine the number of folders and tracks stored on CD 60.

In step 206, processor 26 displays the number of folders and tracks stored on CD 60 on display 32, 132. Method 200 is completed at step 208 and may be completed again upon coupling of CD 60 with random access media reader 24, or upon selection of CD pushbutton 55, 155, shown in Figs. 3 and 5 by the user.

When random access media reader 24 has been selected by actuating CD pushbutton 55, TUNE switch 42, 142 is in a second mode of operation and is operable for fast track searching of the available audio data files stored on CD 60. To quickly locate and access an audio data file, the user may rotate TUNE switch 42, 142 clockwise 46, 146 to step to the next available audio data file, or counterclockwise 48, 148 to step to the previous available audio data file. As TUNE switch 42, 142 is rotated and the current selection of audio data file or CD 60 changes, display 32, 132 is updated with the track number and filename or track name of the newly selected audio data file.

When TUNE switch 42, 142 is released or movement ceases for more than a preset duration, such as 2 seconds, playback of the currently selected audio data file begins. If TUNE switch 42. 142 is again rotated, display and selection of the current audio data file again changes. Although the exemplary embodiment utilizes rotation of a rotary switch, movement or actuation of other types of switches or sensors may also be used.

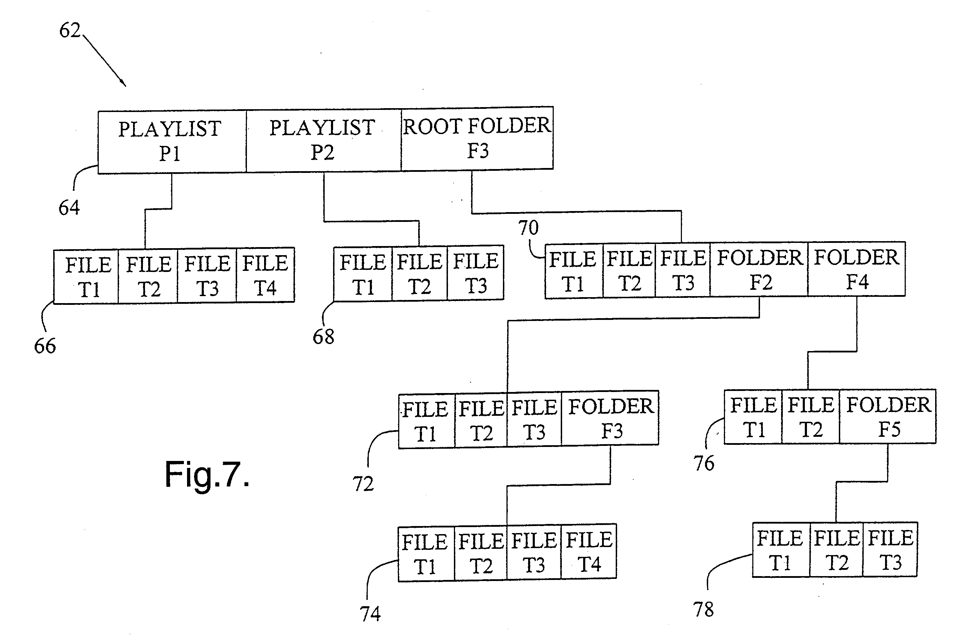

Referring now to Fig. 7, an exemplary data structure of first data CD 62 is shown, first data CD 62 includes root directory 64 having playlist P1, playlist P2, and folder F1. Playlist P1 includes four audio data files 66. Playlist P2 includes three audio data files 68. Folder F1 includes three audio data files 70 and folder F2 and folder F4. Thus, folders F2 and F4 are subfolders of folder F1. Folder F2 includes three audio data files 72 and subfolder F3, which includes four audio data files 74. Folder F4 includes two audio data files 76, and subfolder F5, which includes three audio data files 78. The data structure may include any number of audio data files, playlists, and folders. For example, CD 62 could have zero playlists or only Folder F1, which includes the audio data files stored in the root directory.

Data structures such as that shown in Fig. 7 may be created by software applications such as WinAmp™, MusicMatch™, and RealJukebox™. Playlists T1 and T2 each provide a list of audio data files, or, more specifically, audio data file pointers or directory locations for audio tracks that are sequentially played back when the user selects the playlist. Folders F1-F5 provide a structure for organizing related audio data files by grouping the files into folders that each relate to a particular artist, album, genre, or other characteristic of the recording stored in the audio data files.

Referring again to Fig. 3, first embodiment of user interface 30 also includes FOLDER DOWN pushbutton 50 and FOLDER UP pushbutton 52 for stepping the selection of playlists and folders. For example, if the current selection is an audio data file in playlist P1, pressing FOLDER UP pushbutton 52 selects and displays track T1 of playlist P2. If playlist P2 is the last playlist in data CD 62, pressing FOLDER UP pushbutton 52 again will select track T1 in folder F1. Additional activations of FOLDER UP pushbutton 52 will continue to select the first track of the next folder until after the last folder, i.e., folder F5, is selected. After the last folder is selected and FOLDER UP pushbutton 52 is again actuated, track T1 of playlist P1 will be selected and display, thus wrapping around not to the first folder F1 but to the first playlist P1.

Operation of FOLDER DOWN pushbutton 50 is analogous but in reverse order to FOLDER UP pushbutton 52. For example, actuating FOLDER DOWN pushbutton 50 will select the previous playlist, wrap to the first folder F1, or wrap from the first folder F1 to the first playlist P1. FOLDER UP pushbutton 152 and FOLDER DOWN pushbutton 150 of the second embodiment of user interface 130 may function identical to FOLDER UP pushbutton 52 and FOLDER DOWN pushbutton 50, respectively.

In order to indicate transitions between the various playlists or between the various folders, an audible signal or visual display can be provided whenever user actuation of input devices 40, 140 steps the selection between the playlists or between the folders. Such an indication may also be implemented only when fast track searching is used or also when the FOLDER UP/DOWN pushbuttons 50, 150, 52, 152 are actuated.

TUNE switch 42, 142 and/or FOLDER UP/DOWN 50, 150, 52, 152 pushbuttons may also be operable for stepping between audio data files stored on a standard audio CD, such as those having audio data files in a CDA format. However, with standard audio CDs, song titles may be unavailable and therefore audio system 20 may only display track numbers, for example, as shown in Figs. 4B and 6B.

Although described in the exemplary embodiments, it will be understood that various modifications may be made to the subject matter without departing from the intended and proper scope of the invention. Accordingly, it will be understood that other audio devices incorporating an embodiment of the audio system and methods device may fall within the scope of this invention, which is defined by the appended claims.

## Claims

1. An audio system (20), including an audio receiver (22) having a radio tuner (23), a random access media reader (24) adapted to access audio data files stored in playlists and folders on a removable random access media (60); a processor (26) coupled to said random access media reader and having software capable of accessing information in said audio data files; said audio receiver connected to the processor; and a display (32, 132) connected to the processor and **characterized by** said software being further capable of displaying the information related to said audio data files, said playlists, and said folders.

2. The audio system of Claim 1, **characterized in that** the information capable of being accessed by said processor includes at least one of the number of said audio data files and the number of said folders stored on said removable random access media.

3. The audio system of Claim 2, **characterized in that** said removable random access media reader includes a compact disc player.

4. The audio system of Claim 2, **characterized in that** said processor is capable of accessing audio data files that include MP3 files.

5. The audio system of Claim 2, **characterized in that** said processor initiates counting and displaying of the information upon coupling of said removable random access media with said random access media reader.

6. A method of cataloguing a plurality of audio data files stored in folders and playlists on random access media (60) in an audio system (20) having an audio receiver (22), a random access media reader (24), and a display (32, 132), **characterized by** the steps of reading the media to determine the number of audio data files stored on the media; and displaying on the display the number of audio data files including audio data files stored in the folders and playlists.

7. The method of Claim 6, further **characterized by** the steps of reading the media to determine the number of data folders stored on the media; and displaying the number of data folders on said display.

8. The method of Claim 6, further **characterized by** the steps of reading the media to determine the number of playlists stored on the media; and displaying the number of playlists on the display.

9. The method of Claim 6, **characterized in that** said steps of reading the media and displaying on the display are initiated upon coupling of the media with the random access media reader.

10. An audio system (20) including an audio receiver (22), a random access media reader (24) adapted for accessing audio data files stored in random access media (60), a processor (26) coupling said audio receiver and said random access media reader, a display (32, 132) coupled to said processor, and **characterized by** software enabling said random access media reader to access folders and playlists on the random access media, said processor to read the folders and playlists to determine the number of audio data files stored on said media and display the number of audio data files on said display.

11. The audio system of Claim 10, **characterized in that** said software enables said processor to read said media to determine the number of data folders stored on said media and display the number of data folders on said display.

12. The audio system of Claim 10, **characterized in that** said software enables said processor to read said media to determine the number of playlists stored on said media and display the number of playlists on said display.

13. The audio system of Claim 10, **characterized in that** said software enables said processor to detect coupling of said media with said random access media reader and initiate said reading and displaying upon said coupling.

14. The audio system of Claim 13, **characterized in that** said random access media reader is capable of accessing media that includes a compact disc.

15. The audio system of Claim 14, **characterized in that** said random access media reader is capable of accessing data files that include MP3 files.
